# FASCICULE DE BREVET EUROPEEN

(11) **EP 0 378 948 B1**
(45) Date de publication et mention de la délivrance du brevet: **11.08.1993**
(21) Numéro de dépôt: 89403620.1
(22) Date de dépôt: 22.12.1989
(51) Int. Cl.: B60B 33/00, F16C 13/00

(54) **Roue pour chariot comportant deux paliers de roulement protégés par des pare-fils**
Wagenrad mit zwei durch Fadenschutzscheiben geschützten Kugellagern
Carriage wheel with two bearings protected by tread guards

(30) Priorité: 27.12.1988 FR 8817247
(43) Date de publication de la demande: 25.07.1990
(73) Titulaire: GUITEL-ETIENNE MOBILOR Société Anonyme, F-93310 Le Pré Saint-Gervais (FR)
(72) Inventeur: Dumonteil, Jean-Pierre P., F-75019 Paris (FR); Huart, Gilbert, F-38340 Voreppe (FR); Roy, Jean-Pierre, F-93700 Drancy (FR)
(74) Mandataire: Hasenrader, Hubert

(56) Documents cités:
- CH-A- 243 251
- DE-A- 2 028 762
- DE-A- 2 244 840
- DE-A- 2 751 342
- FR-A- 1 178 921
- FR-A- 2 340 469
- GB-A- 1 266 327
- US-A- 4 095 846

## Description

La présente invention concerne une roue pour chariot, destinée à être montée sur un arbre et comportant un moyeu, un axe adapté à l'arbre, une jante et deux paliers de roulement disposés de façon symétrique de part et d'autre du plan médian de la roue, chaque palier de roulement comportant une bague extérieure sertie dans un logement annulaire latéral formé dans le moyeu, une bague intérieure située en face de la bague extérieure et fixée à l'axe de la roue, et des éléments de roulement retenus dans un chemin de roulement intérieur et un chemin de roulement extérieur prévus respectivement dans la bague intérieure et la bague extérieure, et chaque palier de roulement étant protégé contre l'infiltration d'éléments étrangers par un pare-fils fixé à la bague intérieure et s'étendant radialement sur une partie de la face latérale de la roue.

Ce type de roue est communément monté sur des chariots destinés à être manoeuvrés manuellement ou tirés par des engins de traction. La roue est, en général, maintenue sur l'arbre par des flasques latéraux fixés à l'arbre entre lesquels est maintenu l'axe de la roue.

Le brevet français 2 340 469 décrit une roue de ce type dans laquelle les bagues intérieures sont constituées par la partie centrale d'une pièce annulaire en tôle emboutie dont la partie périphérique forme un pare-fils protégeant le palier de roulement contre l'infiltration d'éléments étrangers. Les bagues intérieures sont rendues solidaires entre elles par une entretoise formant axe de la roue. Les bagues extérieures sont constituées par des cuvettes en acier serties dans des logements annulaires ménagés de part et d'autre du moyeu de la roue. Les éléments de roulement sont maintenus dans des chemins de roulement extérieur et intérieur.

Le chemin de roulement extérieur est délimité dans le sens radial par la paroi annulaire de la cuvette en acier et dans le sens axial par le fond de la cuvette situé du côté du plan médian de la roue, et le chemin de roulement intérieur est délimité par la partie centrale de la pièce annulaire qui a une forme évasée et s'étend radialement vers l'extérieur en s'éloignant du plan médian de la roue. Cette roue présente des difficultés de montage. De plus, les pare-fils étant en tôle emboutie et les cuvettes étant en acier, les paliers de roulement sont bruyants et sont soumis à la corrosion.

Pour pallier ces inconvénients, il a été proposé de réaliser des paliers et roulement dans lesquels les bagues intérieure et extérieure et, éventuellement, les billes ou autres éléments de roulement sont réalisées en une matière plastique supportant les efforts. Le brevet français 2 114 537 décrit un tel palier de roulement dans lequel les bagues intérieure et extérieure sont réalisées chacune en une seule pièce comportant un chemin de roulement découpé dans la bague et délimité d'un côté par une paroi de la bague ayant une forme évasée et de l'autre côté par un épaulement annulaire qui s'étend radialement au-delà ou en deçà du diamètre nominal du chemin de roulement correspondant.

L'une des bagues est élastiquement déformable pour permettre l'assemblage du palier par assemblage à force des bagues avec les éléments de roulement positionnés dans l'autre bague.

Ce palier de roulement est d'un coût de revient faible, et est peu bruyant. Il peut supporter des efforts radiaux élevés, mais, du fait que l'épaulement délimitant un côté du chemin de roulement doit pouvoir s'enclencher de force avec les éléments de roulement positionnés dans l'autre bague, cet épaulement ne peut avoir qu'une paroi de faible dimension, et le palier de roulement correspondant ne peut supporter des efforts importants que selon une seule direction axiale.

Ce brevet 2 114 537 décrit également un palier de roulement prévu pour les cas dans lesquels il s'exerce des efforts élevés à la fois dans les deux directions axiales et dans le plan radial. Ce palier de roulement, ayant deux rangées de billes, comporte une seule bague extérieure et deux bagues intérieures que l'on introduit en partant de directions opposées. Chaque bague intérieure se monte par enclenchement avec des épaulements et des dégagements adjacents aux rangées de billes.

US-A-4 095 846 divulgue une roue du type mentionné ci-dessus et représente l'état de la technique le plus proche de la présente invention par le fait que les bagues intérieures des deux paliers se prolongent axialement vers le plan médian de la roue pour former l'axe de la roue, leurs faces d'extrémité en vis à vis étant jointives. Comme dans le brevet 2 114 537, chaque palier comporte une bague intérieure et une bague extérieure réalisées chacune en une seule pièce.

Le but de la présente invention est de proposer une roue du type mentionné qui puisse supporter des efforts axiaux importants dans les deux directions, qui soit peu bruyant, d'un coût de revient faible et ne nécessite pas d'entretien particulier.

Le but est atteint selon l'invention par le fait que la roue du type mentionné est caractérisée en ce que l'une des bagues des paliers de roulement est constituée de deux pièces comprenant, d'une part, un manchon qui est destiné à retenir les éléments de roulement positionnés dans un premier chemin de roulement de l'autre bague et dont la face située du côté des éléments de roulement comporte un épaulement annulaire qui s'étend radialement vers l'autre bague et délimite un deuxième chemin de roulement, et, d'autre part, une pièce annulaire destinée au blocage des éléments de roulement, disposée de l'autre côté du deuxième chemin de roulement par rapport à l'épaulement annulaire, solidarisée au manchon et élastiquement déformable pour permettre l'assemblage du palier par assemblage à force de ladite pièce de blocage avec ledit manchon, ladite pièce annulaire de blocage présentant une face latérale disposée au voisinage immédiat de l'un des côtés axiaux des éléments de roulement.

Grâce à cette structure, les paliers de roulement peuvent être fabriqués séparément puis montés de force dans les logements annulaires latéraux formés chacun dans le moyeu, de part et d'autre, du plan médian de la roue. La bague extérieure est sertie dans un logement annulaire latéral correspondant, et les deux bagues intérieures viennent buter l'une contre l'autre dans le plan médian de la roue et forment l'axe de la roue. L'effort axial dirigé vers le plan médian de la roue auquel est soumis un palier de roulement est ainsi propagé à la bague intérieure de l'autre palier de roulement et au flasque qui maintient l'axe de la roue sur l'arbre du chariot.

De préférence, les faces annulaires du manchon et de la pièce annulaire de blocage, qui sont en vis-à-vis, sont cylindriques et ont un diamètre sensiblement égal au diamètre du deuxième chemin de roulement.

La pièce annulaire de blocage comprend un échappement annulaire formé sur sa face située en vis-à-vis du manchon, le manchon comprend une gorge annulaire ménagée dans sa face située en vis-à-vis de la pièce annulaire de blocage et ledit échappement annulaire coopère avec ladite gorge annulaire pour solidariser la pièce annulaire de blocage avec le manchon.

Selon un mode de réalisation particulier, la bague intérieure est constituée de deux pièces, la pièce annulaire de blocage est disposée à la partie d'extrémité du manchon éloignée du plan médian de la roue et comporte une protubérance annulaire qui s'étend radialement vers l'intérieur, recouvre la face d'extrémité latérale du manchon correspondant et le pare-fils est fixé sur la protubérance annulaire de la pièce annulaire de blocage.

La protubérance annulaire peut s'étendre, de plus, radialement vers l'extérieur et recouvrir la face d'extrémité latérale de la bague extérieure correspondante.

Le pare-fils est encliqueté sur la protubérance annulaire de la pièce annulaire de blocage.

Selon une autre variante, le pare-fils est formé en une seule pièce avec la pièce de blocage.

D'autres avantages et caractéristiques de l'invention apparaîtront à la lecture d'un mode de réalisation fait à titre d'exemple illustratif et en référence aux dessins annexés dans lesquels :
- la figure 1 est une coupe axiale de la roue selon l'invention,
- la figure 2 montre en détail un palier de roulement de la roue selon l'invention,
- la figure 3 est une coupe partielle d'une première variante de roue selon l'invention,
- la figure 4 montre une coupe partielle d'une deuxième variante de roue, et
- la figure 5 représente une coupe partielle d'une troisième variante de roue selon l'invention.

Le dessin représente une roue 1 destinée à être montée sur un arbre non représenté et comportant un moyeu 2, un axe 3 adapté à l'arbre, une jante 4 et deux paliers de roulement 5 et 5a disposés de façon symétrique, de part et d'autre du plan médian 6 de la roue 1. Les paliers de roulement 5 et 5a sont protégés contre l'infiltration des éléments étrangers par deux pièces annulaires 7 et 7a, formant pare-fils, disposées de part et d'autre du moyeu 2 s'étendant chacune depuis la bague intérieure 8 du palier de roulement radialement vers l'extérieur, le bord d'extrémité périphérique 9 du pare-fils étant au voisinage de la partie extérieure 10a de la paroi 10 d'un évidement annulaire 11 formé sur la face latérale de la roue.

La roue 1 est de préférence symétrique, mais ce n'est pas obligatoire, par rapport au plan médian 6 de la roue 1, et les paliers de roulement 5 et 5a étant disposés de façon symétrique par rapport au plan médian 6 de la roue 1, seul l'un d'eux sera décrit.

Le palier de roulement 5 comporte une bague intérieure 8, une bague extérieure 12 et des éléments de roulement 13, de préférence des billes, qui sont tenus dans les chemins de roulement intérieur 14 de la bague intérieure 8 et le chemin de roulement extérieur 15 de la bague extérieure 12.

La bague extérieure 12 est réalisée, de préférence, en une matière plastique. Elle est monobloc et est sertie dans un logement annulaire 16 de section carrée ménagée dans la face latérale 17 du moyeu 2. Le chemin de roulement extérieur 15, en forme de gouttière torique, est découpé dans la paroi cylindrique intérieure 18 de la bague extérieure 12.

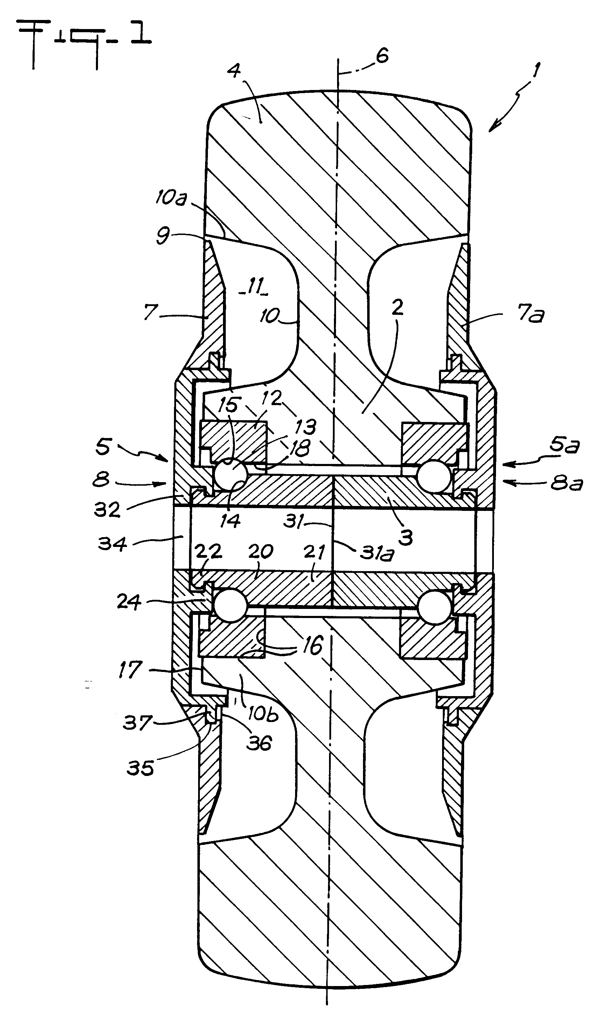

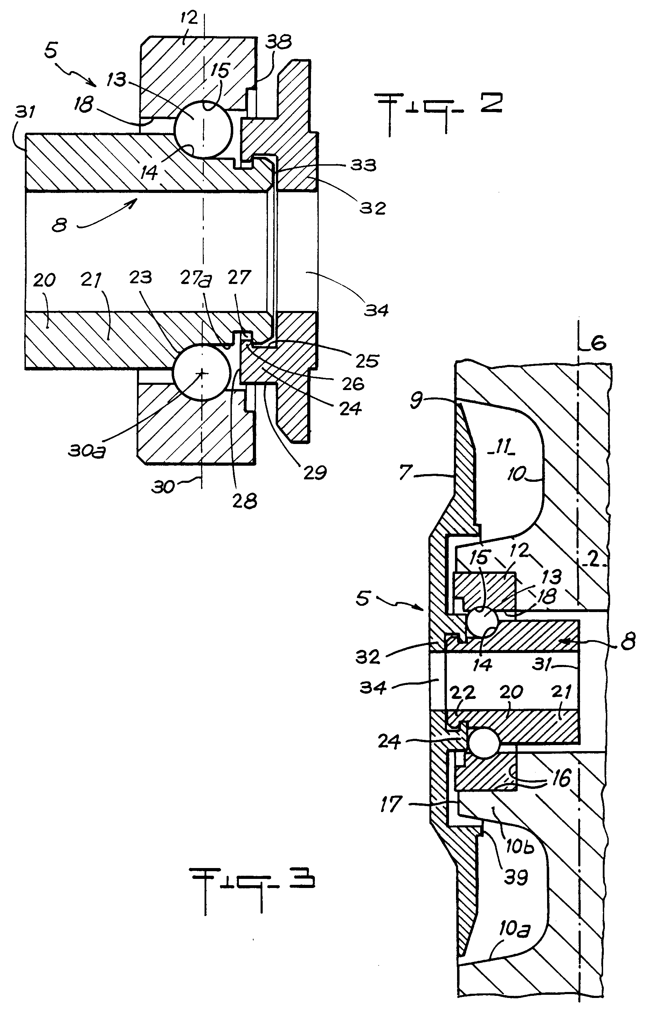

Comme on le voit plus clairement sur la figure 2, la bague intérieure 8 est constituée de deux pièces, de préférence réalisées en une matière plastique, d'une part un manchon cylindrique 20 dont une partie d'extrémité 21 a un diamètre extérieur supérieur au diamètre du chemin de roulement intérieur 14, et dont l'autre partie d'extrémité 22 a un diamètre extérieur égal ou sensiblement égal au diamètre du chemin de roulement intérieur 14, les deux parties d'extrémité 21 et 22 étant reliées par une paroi annulaire 23 évasée formant épaulement, et qui délimite le chemin de roulement intérieur 14 du côté de la partie d'extrémité 21 du manchon 20 ayant le plus grand diamètre extérieur, et, d'autre part, par une pièce annulaire de blocage 24 montée sur la partie d'extrémité 22 du manchon 20 ayant le plus petit diamètre extérieur.

La pièce annulaire de blocage 24 présente une face intérieure 25 de forme cylindrique ayant un diamètre légèrement supérieur au diamètre de la partie d'extrémité 22 du manchon 20 et sensiblement égal au diamètre du chemin de roulement intérieur 14, et comportant un échappement annulaire 26 s'étendant radialement vers l'axe 3 de la roue 1 et destiné à coopérer avec une gorge annulaire 27 correspondante ménagée dans la face extérieure 27a de la partie d'extrémité 22 du manchon 20 qui est située en vis-à-vis de la face intérieure 25 de la pièce annulaire de blocage 24.

La face latérale 28 de la pièce annulaire de blocage 24 située du côté de la paroi annulaire ou épaulement 23 délimite l'autre côté du chemin de roulement intérieur 14.

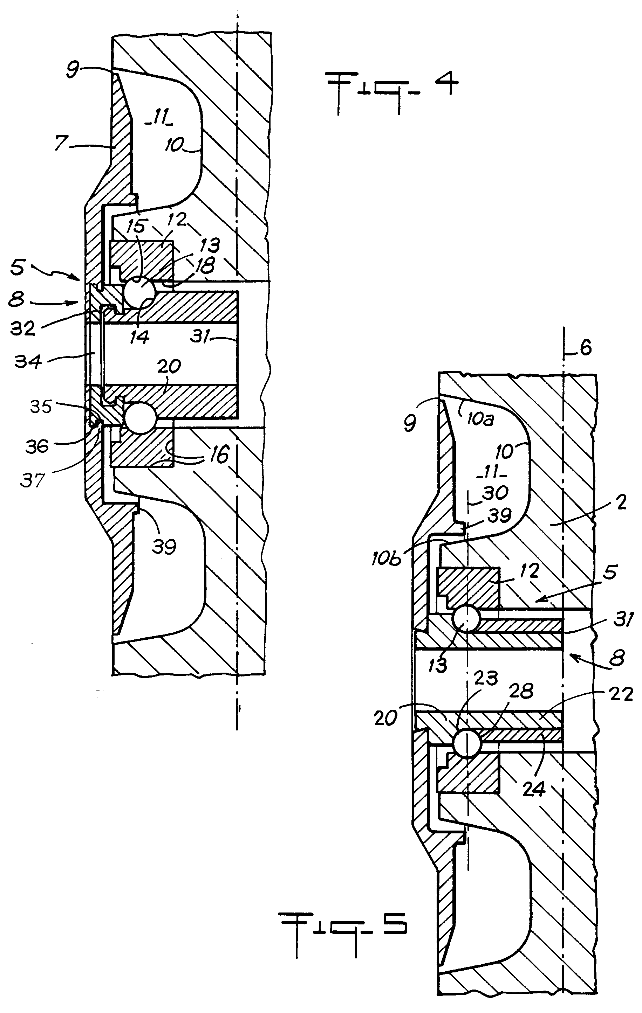

Le diamètre de la paroi cylindrique intérieure 18 de la bague extérieure 12 est supérieur au diamètre extérieur de la partie d'extrémité 21 du manchon 20 ayant le plus grand diamètre et supérieur au diamètre de la face extérieure 29 de la pièce annulaire de blocage 24 située au voisinage et à l'intérieur de la bague extérieure 12, mais la distance entre les faces voisines des bagues intérieure 8 et extérieure 12 est faible et est, au plus, égale à 30 % du diamètre des éléments de roulement 13. Le chemin de roulement extérieur 15 recouvre les éléments de roulement 13 de part et d'autre d'un plan radial 30 passant par les centres 30a des éléments de roulement 13, et l'angle de recouvrement du chemin de roulement 15 est sensiblement égal à 120°. La paroi annulaire ou épaulement 23 de la bague intérieure 8 recouvre les éléments de roulement 13 d'un côté du plan radial 30 sur un angle sensiblement égal à 80° et la face latérale 28 de la pièce de blocage 24 est disposée au voisinage immédiat de l'un des côtés axiaux des éléments de roulement 13, comme on le voit sur les figures 1, 2, 3 et 4.

La figure 5 montre une variante d'une pièce annulaire de blocage 24 montée sur la partie d'extrémité 22 du manchon 20 ayant une face latérale 28 dont la forme est symétrique à la forme de l'épaulement 23 par rapport au plan radial 30.

Dans l'exemple de réalisation de la figure 5, la pièce annulaire de blocage 24 et la partie d'extrémité 22 du manchon 20 ayant le plus petit diamètre extérieur se trouvent du côté du plan médian 6 de la roue 1 et se prolongent axialement jusqu'au plan médian 6, de telle manière que la face d'extrémité 31 de la bague intérieure 8 située dans le plan médian 6 soit au contact de la face d'extrémité 31a non représentée sur la figure 5 de la bague intérieure du deuxième palier de roulement 5a.

De préférence, la pièce annulaire de blocage 24 et la partie d'extrémité 22 du manchon 20 sont situées du côté de la face latérale 17 du moyeu 2, comme cela est représenté sur les figures 1, 2, 3 et 4. Dans ce cas, la partie d'extrémité 21 du manchon 20, ayant le plus grand diamètre extérieur, se prolonge axialement jusqu'au plan médian 6 de telle manière que les faces d'extrémité 31 et 31a en vis-à-vis des deux bagues internes 8 et 8a soient jointives. Les deux bagues internes 8 et 8a des deux paliers de roulement 7 et 7a forment ainsi l'axe 3 de la roue 1.

La pièce de blocage 24 comporte à son extrémité éloignée du chemin de roulement intérieur 14 une protubérance annulaire 32 qui s'étend radialement vers l'intérieur et qui recouvre la face d'extrémité latérale 33 du manchon 20. La pièce annulaire de blocage 24 a ainsi la forme d'un bouchon annulaire muni d'un alésage 34 pour le passage de l'arbre que l'on adapte par encliquetage sur la partie d'extrémité 22 de faible diamètre du manchon 20 par déformation élastique de l'échappement annulaire 26 destinée à coopérer avec la gorge annulaire 27 du manchon 20.

Le pare-fils 7 est fixé par encliquetage à l'aide d'une gorge annulaire 35 ménagée sur la face intérieure 36 du pare-fils 7 et coopérant avec une gorge annulaire 37 formée sur la face extérieure de la protubérance annulaire 32 de la pièce de blocage 24. De préférence, comme on le voit sur les figures 1 à 3, la protubérance annulaire 32 de la pièce de blocage 24 s'étend également radialement vers l'extérieur de façon à recouvrir au moins partiellement la face latérale externe 38 de la bague extérieure 12, et le pare-fils 7 peut être formé en une seule pièce avec la pièce annulaire de blocage 24. La gorge annulaire 35 peut être ménagée sur la face extérieure de la paroi annulaire 32 et coopérer avec un épaulement annulaire 37 formé sur la face intérieure 36 du pare-fils 7 (figure 4).

Le pare-fils 7 ou la protubérance annulaire 32 est muni sur sa face située en regard de l'évidement 11 formé sur la face latérale de la roue 1 entre le moyeu 2 et la jante 4 d'une projection annulaire 39 qui s'étend axialement vers la partie intérieure 10b de la paroi 10 de l'évidement annulaire 11. Ainsi, la portion du pare-fils 7 comprise entre la projection annulaire 39 et son bord d'extrémité périphérique 9 obture l'évidement annulaire 11.

Dans le mode de réalisation décrit, la bague intérieure 8 est constituée de deux pièces et la bague extérieure 12 est formée en une seule pièce. Il va de soi que la bague intérieure 8 peut être formée en une seule pièce et la bague extérieure 12 peut être formée de deux pièces. Dans ce cas, la bague extérieure 12 comprend un manchon 20 dont la face extérieure est en contact avec le moyeu 2 et la pièce de blocage 24 est montée à l'intérieur de la partie d'extrémité 21 du manchon 20 ayant le plus grand diamètre intérieur.

## Revendications

1. Roue (1) pour chariot, destinée à être montée sur un arbre et comportant un moyeu (2), un axe (3) adapté à l'arbre, une jante (4) et deux paliers de roulement (5, 5a) disposés de façon symétrique de part et d'autre du plan médian (6) de la roue (1), chaque palier de roulement comportant une bague extérieure (12) sertie dans un logement annulaire latéral (16) formé dans le moyeu (2), une bague intérieure (8) située en face de la bague extérieure (12) et fixée à l'axe (3) de la roue (1), et des éléments de roulement (13) retenus dans un chemin de roulement intérieur (14) et un chemin de roulement extérieur (15) prévus, respectivement, dans la bague intérieure (8) et la bague extérieur (12), et chaque palier de roulement étant protégé contre l'infiltration d'éléments étrangers par un pare-fils (7) fixé à la bague intérieure (8) et s'étendant radialement sur une partie de la face latérale (17) de la roue (1),
les bagues intérieures (8, 8a) des deux paliers de roulement (5, 5a) se prolongeant axialement vers le plan médian (6) de la roue (1) pour former l'axe (3) de la roue (1), leurs faces d'extrémité (31, 31a) en vis-à-vis étant jointives, caractérisé en ce que l'une (8) des bagues (8, 12) des paliers de roulement (5, 5a) est constituée de deux pièces comprenant, d'une part, un manchon (20) qui est destiné à retenir les éléments de roulement (13) positionnés dans un premier chemin de roulement (15) de l'autre bague (12) et dont la face (27a), située du côté des éléments de roulement (13), comporte un épaulement annulaire (23) qui s'étend radialement vers l'autre bague (12) et délimite un deuxième chemin de roulement (14), et, d'autre part, une pièce annulaire (24) destinée au blocage des éléments de roulement (13), disposée de l'autre côté du deuxième chemin de roulement (14) par rapport à l'épaulement annulaire (23), solidarisée au manchon (20) et élastiquement déformable pour permettre l'assemblage du palier (5) par assemblage à force de ladite pièce de blocage (24) avec ledit manchon (20) , ladite pièce annulaire de blocage présentant une face latérale (28) disposée eu voisinage immédiat de l'un des côtés axiaux des éléments de roulement (13).

2. Roue (1) selon la revendication 1, caractérisée en ce que les faces annulaires (27a, 25) du manchon (20) et de la pièce annulaire de blocage (24), qui sont en vis-à-vis, sont cylindriques et ont un diamètre sensiblement égal au diamètre du deuxième chemin de roulement (14).

3. Roue (1) selon la revendication 2, caractérisée en ce que la pièce annulaire de blocage (24) comprend un échappement annulaire (26) formé sur sa face (25) située en vis-à-vis du manchon (20), en ce que le manchon (20) comprend une gorge annulaire (27) ménagée dans sa face (27a) située en vis-à-vis de la pièce annulaire de blocage (24) et en ce que ledit échappement annulaire (26) coopère avec ladite gorge annulaire (27) pour solidariser la pièce annulaire de blocage (24) avec le manchon (20).

4. Roue (1) selon l'une des revendications 1 à 3, caractérisée en ce que la bague intérieure (8) est constituée de deux pièces, en ce que la pièce annulaire de blocage (24) est disposée à la partie d'extrémité (22) du manchon (20) éloignée du plan médian (6) de la roue (1) et comporte une protubérance annulaire (32) qui s'étend radialement vers l'intérieur, recouvre la face d'extrémité latérale (33) du manchon (20) correspondant et en ce que le pare-fils (7) est fixé sur la protubérance annulaire (32) de la pièce annulaire de blocage (24).

5. Roue (1) selon la revendication 4, caractérisée en ce que la protubérance annulaire (32) s'étend de plus radialement vers l'extérieur et recouvre la face d'extrémité latérale (38) de la bague extérieure (12) correspondante.

6. Roue (1) selon l'une des revendications 4 ou 5, caractérisée en ce que le pare-fils (7) est encliqueté sur la protubérance annulaire (32) de la pièce annulaire de blocage (24).

7. Roue (1) selon la revendication 5, caractérisée en ce que le pare-fils (7) est formé en une seule pièce avec la pièce de blocage (24).

8. Roue (1) selon l'une des revendications précédentes, caractérisée en ce que l'une (8) des bagues (8, 12) du palier de roulement (5) est constituée de deux pièces et l'autre bague (12) est formée en une seule pièce, en ce que la bague (12) formée en une seule pièce possède un chemin de roulement (15) en forme de gouttière torique qui recouvre les éléments de roulement (13) sur un angle sensiblement égal à 120°, en ce que l'épaulement annulaire (23) du manchon (20) recouvre les éléments de roulement (13) sur un angle sensiblement égal à 80°

9. Roue (1) selon l'une des revendications précédentes, caractérisée en ce que les bagues (8, 12) sont réalisées en matière plastique.

## Claims

1. Carriage wheel (1) adapted to be mounted on a shaft and having a hub (2), an axle (3) fitted on to the shaft, a rim (4) and two bearings (5, 5a) disposed symmetrically on either side of the centre plane (6) of the wheel (1), each bearing having an outer race (12) crimped into a lateral annular housing (16) formed in the hub (2), an inner race (8) situated opposite the outer race (12) and fixed to the axle (3) of the wheel (1), and roller elements (13) held in an inner track (14) and an outer track (15) provided in the inner race (8) and the outer race (12) respectively, and each bearing being protected against the infiltration of foreign bodies by a tread guard (7) fixed to the inner race (8) and extending radially over part of the lateral face (17) of the wheel (1), the inner races (8, 8a) of the two bearings (5, 5a) being extended axially towards the centre plane (6) of the wheel (1) in order to form the axle (3) of the wheel (1), their opposing end faces (31, 31a) being contiguous, characterised in that one (8) of the races (8, 12) of the bearings (5, 5a) consists of two parts comprising, on the one hand, a sleeve (20) which is adapted to hold the roller elements (13) positioned in a first track (15) of the other race (12), and the face (27a) of which situated at the side of the roller elements (13) has an annular shoulder (23) which extends radially towards the other race (12) and defines a second track (14) and, on the other hand, an annular component (24) adapted to lock the roller elements (13), disposed on the other side of the second track (14) from the annular shoulder (23), made integral with the sleeve (20) and elastically deformable so that the bearing (5) can be assembled by forcing the said locking component (24) together with the said sleeve (20), the said annular locking component having a lateral face (28) disposed in the immediate vicinity of one of the axial sides of the roller elements (13).

2. Wheel (1) according to claim 1, characterised in that the opposing annular faces (27a, 25) of the sleeve (20) and of the annular locking component (24) are cylindrical and have a diameter substantially equal to the diameter of the second track (14).

3. Wheel (1) according to claim 2, characterised in that the annular locking component (24) comprises an annular passage (26) formed on its face (25) situated opposite the sleeve (20), the sleeve (20) comprises an annular throat (27) provided in its face (27a) situated opposite the annular locking component (24) and the said annular passage (26) cooperates with the said annular throat (27) in order to make the annular locking component (24) integral with the sleeve (20).

4. Wheel (1) according to one of claims 1 to 3, characterised in that the inner race (8) consists of two parts, the annular locking component (24) is disposed in the end part (22) of the sleeve (20) remote from the centre plane (6) of the wheel (1) and has an annular protuberance (32) which extends radially towards the interior and covers the lateral end face (33) of the corresponding sleeve (20) and the tread guard (7) is fixed to the annular protuberance (32) of the annular locking component (24).

5. Wheel (1) according to claim 4, characterised in that the annular protuberance (32) in addition extends radially towards the exterior and covers the lateral end face (38) of the corresponding outer race (12).

6. Wheel (1) according to one of claims 4 or 5, characterised in that the tread guard (7) is snapped on to the annular protuberance (32) of the annular locking component (24).

7. Wheel (1) according to claim 5, characterise in that the tread guard (7) is formed in one single piece with the locking component (24).

8. Wheel (1) according to one of the preceding claims, characterised in that one (8) of the races (8, 12) of the bearing (5) consists of two parts and the other race (12) is formed in one single piece, the race (12) formed in one single piece has a track (15) in the form of a toric channel which covers the roller elements (13) over an angle substantially equal to 120° and the annular shoulder (23) of the sleeve (20) covers the roller elements (13) over an angle substantially equal to 80°.

9. Wheel (1) according to one of the preceding claims, characterised in that the races (8, 12) are made of plastic.

## Patentansprüche

1. Rad (1) für einen Wagen, das dazu dient, auf einer Welle angeordnet zu werden, und eine Nabe (2), eine an die Welle angepaßte Achse (3), eine Felge (4) und zwei Wälzlager (5, 5a) aufweist, die auf symmetrische Weise beiderseits der Mittenebene (6) des Rades (1) angeordnet sind, wobei ein jedes Wälzlager einen Außenring (12), der in eine seitliche ringförmige Aufnahme (16) eingezwängt ist, die in der Nabe (2) ausgebildet ist, einen inneren Ring (8), der gegenüber dem äußeren Ring (12) angeordnet ist, und an der Achse (3) des Rads (1) befestigt ist, und Wälzkörper (13) aufweist, die in einem inneren Rollweg (14) und einem äußeren Rollweg (15) gehalten werden, die in dem inneren Ring (8) bzw. dem äußeren Ring (12) vorgesehen sind, und wobei ein jedes Wälzlager gegen das Eindringen von Fremdstoffen oder - körpern durch einen Fadenschutz (7) geschützt ist, der an der dem inneren Ring (8) befestigt ist und sich radial über einen Bereich der seitlichen Seite (17) des Rades (1) erstreckt,
wobei die inneren Ringe (8, 8a) der beiden Wälzlager (5, 5a) sich axial zur Mittenebene (6) des Rades (1) verlängern, um die Achse (3) des Rades (1) zu bilden, wobei ihre Endseiten (31, 31a), die diagonal gegenüberliegen, sich miteinander verbinden, dadurch gekennzeichnet, daß einer (8) der Ringe (8, 12) der Wälzlager (5, 5a) aus zwei Teilen gebildet wird, die einerseits eine Muffe (20), die dazu dient, die Wälzelemente (13) zurückzuhalten, die in einem ersten Rollweg (15) des anderen Rings (12) positioniert sind, und deren Seite (27a), die auf der Seite der Rollelemente oder Wälzelemente (13) angeordnet ist, eine ringförmige Schulter (23) aufweist, die sich radial zum anderen Ring (12) erstreckt, und einen zweiten Rollweg (14) begrenzt, und, andererseits ein ringförmiges Teil (24) aufweist, das zum Blockieren der Wälzelemente (13) dient, das auf der anderen Seite des zweiten Rollwegs (14) bezüglich der ringförmigen Schulter (23) angeordnet ist, verbunden mit der Muffe (20) und elastisch verformbar, um das Zusammenfügen des Lagers (5) durch Zusammensetzen unter Kraft des Blockierungsteils (24) mit der Muffe (20) zu erlauben, wobei das ringförmige Blockierungsteil eine seitliche Seite (28) aufweist, die in der unmittelbaren Nähe der einen der axialen Seiten der Wälzelemente (13) angeordnet ist.

2. Rad (1) nach Anspruch 1, dadurch gekennzeichnet, daß die ringförmigen Seiten (27a, 25) der Muffe (20) und des ringförmigen Blockierungsteils (24), die einander gegenüberliegen, zylindrisch sind, und einen Durchmesser aufweisen, der im wesentlichen gleich dem Durchmesser des zweiten Rollwegs (14) ist.

3. Rad (1) nach Anspruch 2, dadurch gekennzeichnet, daß das ringförmige Blockierungsteil (24) einen ringförmigen Ausgang oder Austritt (26) aufweist, der auf seiner Seite (25), die gegenüber der Muffe (20) angeordnet ist, ausgebildet ist, daß die Muffe (20) eine ringförmige Nut (27) aufweist, die in ihrer Seite (27a), die gegenüber dem ringförmigen Blockierungsteil (24) angeordnet ist, ausgebildet ist, und daß der ringförmige Austritt (26) mit der ringförmigen Nut (27) zusammenwirkt, um das ringförmige Blockierungsteil (24) mit der Muffe (20) zu verbinden.

4. Rad (1) nach einem der Ansprüche 1 bis 3, dadurch gekennzeichnet, daß der innere Ring (8) aus zwei Teilen gebildet wird, daß das ringförmige Blockierungsteil (24) am Endbereich (22) der Muffe (20), die von der Mittenebene (6) des Rades (1) entfernt ist, angeordnet ist, und einen ringförmigen Vorsprung (32) aufweist, der sich radial nach innen erstreckt, wobei er die entsprechende seitliche Endseite (33) der Muffe (20) bedeckt, und daß der Fadenschutz (7) an dem ringförmigen Vorsprung (32) des ringförmigen Blockierungsteils (24) befestigt ist.

5. Rad (1) nach Anspruch 4, dadurch gekennzeichnet, daß der ringförmige Vorsprung (32) sich darüber hinaus radial nach außen erstreckt und die seitliche Endseite (38) des entsprechenden äußeren Ringe (12) bedeckt.

6. Rad (1) nach einem der Ansprüche 4 oder 5, dadurch gekennzeichnet, daß der Fadenschutz (7) auf dem ringförmigen Vorsprung (32) des ringförmigen Blockierungsteils (24) aufgeklinkt ist.

7. Rad (1) nach Anspruch 5, dadurch gekennzeichnet, daß der Fadenschutz (7) aus einem einzigen Teil mit dem Blockierungsteil (24) gebildet ist.

8. Rad (1) nach einem der vorhergehenden Ansprüche, dadurch gekennzeichnet, daß einer (8) der Ringe (8, 12) des Wälzlagers (5) aus zwei Teilen und der andere Ring (12) aus einem Teil gebildet wird, daß der Ring (12), der aus einem einzigen Teil gebildet ist, einen Rollweg (15) in Form einer torischen Rinne aufweist, das die Wälzelemente (13) über einen Winkel im wesentlichen gleich 120° bedeckt, daß die ringförmige Schulter (23) der Muffe (20) die Wälzelemente (13) auf einem Winkel im wesentlichen gleich 80° bedeckt.

9. Rad (1) nach einem der vorhergehenden Ansprüche, dadurch gekennzeichnet, daß die Ringe (8, 12) aus Kunststoffmaterial gebildet sind.
